# EUROPÄISCHE PATENTSCHRIFT

(11) **EP 2 412 083 B1**
(45) Veröffentlichungstag und Bekanntmachung des Hinweises auf die Patenterteilung: **12.04.2017**
(21) Anmeldenummer: 10704829.0
(22) Anmeldetag: 19.02.2010
(51) Int. Cl.: H02K 1/32, H02K 9/19

(54) **ANTRIEBSEINRICHTUNG**
DRIVE UNIT
DISPOSITIF D'ENTRAÎNEMENT

(30) Priorität: 25.03.2009 DE 102009001838
(43) Veröffentlichungstag der Anmeldung: 01.02.2012
(73) Patentinhaber: Robert Bosch GmbH, 70442 Stuttgart (DE)
(72) Erfinder: ROHWER, Thorsten, 71732 Tamm (DE); BUEHNERT, Christian, 71397 Leutenbach (DE); KOERKEMEYER, Jens, 71686 Remseck (DE); ESSE, Paul, 71397 Leutenbach (DE); HACKETT, Douglas-Brent, 74232 Abstatt (DE); Kern, Denis, 70190 Stuttgart-Ost (DE); HERZBERGER, Andreas, 73553 Alfdorf (DE)
(86) Internationale Anmeldenummer: PCT/EP2010/052144
(87) Internationale Veröffentlichungsnummer: WO 2010/108736

(56) Entgegenhaltungen:
- EP-A1- 1 956 699
- DE-A1- 2 240 797
- DE-A1-102006 008 049
- US-A- 5 019 733

## Beschreibung

Die vorliegende Erfindung betrifft eine Elektromaschine gemäß dem Oberbegriff des Anspruches 1 und eine Antriebseinrichtung gemäß dem Oberbegriff des Anspruches 14.

### Stand der Technik

Antriebseinrichtungen, vorzugsweise Hybridantriebseinrichtungen, insbesondere mit einer Verbrennungskraftmaschine, und einer Elektromaschine werden beispielsweise eingesetzt, um Kraftfahrzeuge anzutreiben. Die als Motor und Generator fungierende Elektromaschine in dem Kraftfahrzeug weist eine Achse oder Welle mit einem daran angeordneten Stator oder Rotor auf.

Beispielsweise der Stator und der Rotor der Elektromaschine werden von einem Kühlkreislauf mittels Öl gekühlt. Die Welle ist im Allgemeinen zweiteilig und besteht aus einer Rotorwelle mit einer axialen Bohrung und einer inneren Welle. In der axialen Bohrung der Rotorwelle ist die innere Welle angeordnet, wobei sich zwischen der inneren Welle und der Rotorwelle ein im Querschnitt kreisförmiger Spalt ausbildet. Durch diesen Spalt wird das Öl zum Kühlen geleitet. An der Rotorwelle ist eine Wuchtscheibe angeordnet. Die Rotorwelle und die Wuchtscheibe sind mit radialen Kanälen versehen, durch welche das Öl zum Kühlen aus dem Spalt in radialer Richtung nach außen geleitet wird. Aufgrund der Rotationsbewegung der Rotorwelle und der Wuchtscheibe fungiert der Kanal als Pumpe. Das Öl tritt am Ende der Kanäle aus Austrittsöffnungen aus und kühlt dadurch den Stator und den Rotor der Elektromaschine. Das Öl wird ferner von einer zusätzlichen Pumpe aus einem Ölsumpf als Kühlmittelkreislauf in den Spalt geleitet. Diese Pumpe, welche das Öl aus dem Pumpensumpf fördert, pumpt das Öl außerdem zu anderen Komponenten der Antriebseinrichtung, welche gekühlt und/oder geschmiert werden müssen, z. B. ein Differentialgetriebe, ein Getriebe und/oder die Verbrennungskraftmaschine.

Aufgrund der Rotationsbewegung der Kanäle haben diese eine Pumpwirkung und fördern somit auch das Öl. Bei höheren Drehzahlen der Rotorwelle und der Wuchtscheibe tritt eine große Pumpwirkung der Kanäle ein. Dadurch besteht die Gefahr, dass zur Kühlung und/oder zur Schmierung der anderen Komponenten der Antriebseinrichtung nicht genügend Öl zur Verfügung steht, weil dieses von den Kanälen in erhöhtem Umfang angesaugt wird. Dadurch können unter Umständen diese anderen Komponenten der Antriebseinrichtung nicht ausreichend gekühlt und/oder geschmiert werden.

Die DE 10 2006 008 049 A1 zeigt eine Antriebseinheit, welche Folgendes aufweist: einen Motorraum, in dem ein Stator und ein Rotor untergebracht sind; einen Getrieberaum, der in Richtung der Drehachse des Rotors angrenzend an dem Motorraum bereitgestellt ist und in dem ein Getriebe untergebracht ist, wobei die Drehung des Rotors auf das Getriebe übertragen wird; ein Lager zum Stützen der Drehung sowohl des Rotors als auch des Getriebes; und eine Wand, die zwischen dem Motorraum und dem Getrieberaum angeordnet ist, um das Lager zu tragen, wobei die Wand mit einer Öffnung versehen ist, damit Schmieröl, das von dem Getriebe verspritzt wird, auf einen oberen Abschnitt des Stators gespritzt werden kann.

Die DE 102 38 023 B4 zeigt eine Brennkraftmaschine, die einen Generator oder Motor enthält, dessen Stator einen Kern und an dem Kern angebrachte Spulen umfasst und dieser Stator Permanentmagneten gegenüberliegt, die an einer Kurbelwelle der Brennkraftmaschine angebracht sind, wobei die Brennkraftmaschine ferner ein Statorkühlungsmittel zum Kühlen des Stators mit Öl umfasst, wobei die Permanentmagneten am Außenumfang einer Kurbelwange der Kurbelwelle angebracht sind und dass der Stator die die Permanentmagnete tragende Kurbelwange an der vom Zylinderblock abgelegenen Seite bogenförmig umgibt.

Die DE 199 28 247 B4 zeigt einen Motor, aufweisend ein Motorgehäuse, einen Stator von zylindrischer Form, der am Motorgehäuse befestigt ist, einen inneren Rotor, der drehbar innerhalb des Stators angeordnet ist, ein äußerer Rotor drehbar um den Stator angeordnet ist, wobei der innerer Rotor, der Stator und der äußere Rotor konzentrisch angeordnet sind und eine Mehrzahl von Bolzen zum Befestigen des Stators am Motorgehäuse, wobei ein Kühlsystem vorgesehen ist, eine Mehrzahl von Paaren von Kühlkanälen, die im Stator ausgeformt sind, eine Kühlmitteleinlassöffnung zum Einleiten von Kühlmittel in die Kühlkanäle, eine Kühlmittelauslassöffnung zum Ableiten von Kühlmittel von den Kühlkanälen, wobei die Kühlmitteleinlassöffnung und die Kühlmittelauslassöffnung an einem axialen Ende des inneren Rotors vorgesehen und mit den Kühlkanälen verbunden sind, einen Kühlmittelrückflussabschnitt zum Verbinden jedes Kühlkanalpaares, wobei der Kühlmittelrückflussabschnitt in einem anderen axialen Ende des inneren Rotors vorgesehen ist, aufweist, und wobei die Kühlkanäle aus dem Stator und der Mehrzahl der Bolzen gebildet sind.

Die DE 2240797 offenbart einen Rotor einer Elektromaschine, der einen radial ausgerichteten Kanal aufweist, in dem Flüssigkeit förderbar ist. Der radial ausgerichtete Kanal hat eine Austrittsöffnung zum Ausleiten der Flüssigkeit, in der ein Mittel zur Verringerung der Fördermenge angeordnet ist.

### Offenbarung der Erfindung

### Vorteile der Erfindung

Eine erfindungsgemäße Elektromaschine nach wenigstenens einem der Ansprüche 1 oder 7, insbesondere für ein Kraftfahrzeug, umfassend ein Gehäuse, wenigstens eine Welle, einen Stator und einen Rotor, einen Kühlkreislauf zum Kühlen der Elektromaschine mit einer Flüssigkeit, insbesondere Öl, wobei die Flüssigkeit von wenigstens einem wenigstens teilweise radial ausgerichteten Kanal in wenigstens einem rotierenden Teil der Elektromaschine förderbar ist aufgrund einer Rotationsbewegung des wenigstens einen Kanales, wenigstens eine Austrittsöffnung zum Ausleiten der Flüssigkeit aus dem wenigstens einen Kanal, wobei die Elektromaschine mit wenigstens einem Mittel zur Verringerung der Fördermenge pro Zeiteinheit an Flüssigkeit, welche von dem wenigstens einen Kanal aufgrund der Rotationsbewegung des wenigstens einen Kanales förderbar ist, versehen ist.
Das wenigstens eine Mittel verringert die Fördermenge pro Zeiteinheit an Flüssigkeit, die von dem wenigstens einen Kanal gefördert wird. Dadurch ist in vorteilhafter Weise eine gleichmäßige Kühlung unabhängig von der Drehzahl des rotierenden Teils möglich und ferner kann bei einer Integration der Elektromaschine in eine Antriebseinrichtung der Kühlkreislauf auch genutzt werden, um andere Komponenten der Antriebseinrichtung gleichmäßig zu kühlen und/oder zu schmieren. Eine hohe Drehzahl des rotierenden Teils bewirkt somit nicht, dass von dem Kühlkreislauf größere Mengen an Öl abgesaugt werden, so dass zur Kühlung und/oder zur Schmierung von anderen Komponenten der Antriebseinrichtung nicht genügend Öl zur Verfügung steht.

Insbesondere ist das wenigstens eine rotierende Teil die wenigstens eine Welle und/oder eine Wuchtscheibe.

In einer weiteren Ausgestaltung umfasst die wenigstens eine Welle eine Rotorwelle mit einer axialen Bohrung und einer innere Welle, wobei die innere Welle in der axialen Bohrung der Rotorwelle angeordnet ist. Vorzugsweise sind die Rotorwellen und die innere Welle formschlüssig, z. B. mittels einer Verzahnung, miteinander verbunden, so dass die Rotorwellen und die innere Welle die gleiche Drehzahl aufweisen und Drehmomente zwischen der Rotorwelle und der inneren Welle übertragen werden können.

In einer ergänzenden Ausführungsform ist zwischen der inneren Welle und der Rotorwelle ein im Querschnitt kreisförmiger Spalt zum Durchleiten der Flüssigkeit vorhanden.

Vorzugsweise ist der Kühlkreislauf mit einer Pumpe versehen zur zusätzlichen Förderung der Flüssigkeit, vorzugsweise aus einem Pumpensumpf. Die Pumpe, welche nicht den wenigstens einen radial ausgerichteten Kanal darstellt, fördert das Öl zu dem wenigstens einen Kanal und vorzugsweise zu anderen zu kühlenden und/oder zu schmierenden Komponenten, z. B. ein Differentialgetriebe und/oder ein Getriebe und/oder die Verbrennungskraftmaschine.

In einer Variante umfasst das wenigstens eine Mittel wenigstens eine Luftansaugöffnung, wobei die wenigstens eine Luftansaugöffnung fluidleitend mit dem wenigstens einen Kanal verbunden ist zur Verringerung der Fördermenge pro Zeiteinheit an Flüssigkeit.

Zweckmäßig ist die wenigstens eine Luftansaugöffnung radial innerhalb der wenigstens einen Austrittsöffnung ausgebildet und/oder die wenigstens eine Luftansaugöffnung in dem rotierenden Teil ausgebildet. Die wenigstens eine Luftansaugöffnung weist damit einen geringeren Abstand zu einer Achse der Welle auf als die wenigstens eine Austrittsöffnung. Durch die wenigstens eine Luftansaugöffnung, die mit dem Atmosphärendruck der Umgebung verbunden ist, kann Luft in den wenigstens einen Kanal eingeleitet werden, so dass dadurch der von dem wenigstens einen Kanal zur Verfügung stellbare Unterdruck an einer Eintrittsöffnung des wenigstens einen Kanals verringert wird und sich somit die Fördermenge pro Zeiteinheit an Flüssigkeit, welche von dem wenigstens einen Kanal aufgrund der Rotationsbewegung des wenigstens einen Kanales förderbar ist, verringert wird.

In einer weiteren Ausführungsform ist das wenigstens eine Mittel dahingehend ausgebildet, dass die Verringerung der Fördermenge pro Zeiteinheit an Flüssigkeit aufgrund der Rotationsbewegung des wenigstens einen Kanales in Abhängigkeit von der Drehzahl des rotierenden Teils, insbesondere der wenigstens einen Welle, erfolgt, insbesondere indem eine Strömungsquerschnittsfläche des wenigstens einen Kanales veränderbar ist. Insbesondere ist die Verringerung der Fördermenge pro Zeiteinheit an Flüssigkeit indirekt proportional zur Drehzahl des rotierenden Teils, d. h. je höher die Drehzahl des rotierenden Teils ist, desto größer ist die Verringerung der Fördermenge pro Zeiteinheit an Flüssigkeit aufgrund der Rotationsbewegung des wenigstens einen Kanales. Die Verringerung ist von dem wenigstens einen Mittel verursacht. Die Verringerung ist die Differenz aus der Fördermenge pro Zeiteinheit an Flüssigkeit in der Elektromaschine mit und ohne dem wenigstens einen Mittel.

Insbesondere umfasst das wenigstens eine Mittel wenigstens ein wenigstens teilweise in radialer Richtung bewegbares Radialdrosselelement, wobei das wenigstens eine Radialdrosselelement mittels einer Zentrifugalkraft in den wenigstens einen Kanal bewegbar ist, so dass je größer die Zentrifugalkraft ist, desto kleiner die Strömungsquerschnittsfläche des wenigstens einen Kanales wird.

In einer weiteren Ausgestaltung umfasst das wenigstens eine Mittel wenigstens ein elastisches Element, z. B. eine Feder, um das wenigstens eine Radialdrosselelement bei einer kleiner werdenden Zentrifugalkraft zu bewegen, so dass bei einer kleiner werdenden Zentrifugalkraft die Strömungsquerschnittsfläche des wenigstens einen Kanales vergrößert wird.

In einer ergänzenden Variante ist das wenigstens eine Radialdrosselelement und/oder das wenigstens eine elastische Element in dem rotierenden Teil, z. B. der Wuchtscheibe, angeordnet.

In einer weiteren Variante umfasst das wenigstens eine Mittel wenigstens ein wenigstens teilweise in tangentialer Richtung bewegbares Tangentialdrosselelement, wobei das Tangentialdrosselelement mittels einer Trägheitskraft bzw. Tangentialkraft in den wenigstens einen Kanal bewegbar ist, so dass je größer die Drehzahl des wenigstens einen Tangentialdrosselelements ist, desto kleiner die Strömungsquerschnittsfläche des wenigstens einen Kanales wird und umgekehrt.

In einem weiteren Beispiel umfasst das wenigstens eine Mittel wenigstens ein elastisches Element, z. B. eine Feder, um das wenigstens eine Tangentialdrosselelement bei einer kleiner werdenden Trägheitskraft bzw. Tangential aus dem wenigstens einen Kanal heraus zu bewegen, so dass die Strömungsquerschnittsfläche des wenigstens einen Kanales vergrößert wird.

Insbesondere ist das wenigstens eine Tangentialdrosselelement und/oder das wenigstens eine elastische Element in dem rotierenden Teil, z. B. der Wuchtscheibe, angeordnet.

Eine erfindungsgemäße Antriebseinrichtung, vorzugsweise Hybridantriebseinrichtung, insbesondere für ein Kraftfahrzeug, umfasst vorzugsweise eine Verbrennungskraftmaschine, insbesondere zum Antrieb des Kraftfahrzeuges, vorzugsweise wenigstens ein Gehäuse, wenigstens eine, vorzugsweise in dem wenigstens einen Gehäuse angeordnete, Elektromaschine mit einem Stator und einem Rotor, wobei die wenigstens eine Elektromaschine gemäß einer in dieser Schutzrechtsanmeldung beschriebenen Elektromaschine ausgebildet ist.

In einer weiteren Ausgestaltung ist das wenigstens eine Gehäuse mehrteilig.

In einer zusätzlichen Ausgestaltung ist das Gehäuse einteilig.

In einer weiteren Ausgestaltung fungiert die wenigstens eine Elektromaschine als Motor und/oder als Generator.

Ein erfindungsgemäßes Kraftfahrzeug umfasst wenigstens eine in dieser Anmeldung beschriebene Elektromaschine und/oder wenigstens eine in dieser Anmeldung beschriebene Antriebseinrichtung.

In einer weiteren Ausgestaltung umfasst das Kraftfahrzeug aufladbare Batterien. Die Batterien versorgen die Elektromaschine mit elektrischen Strom und beim Verzögern des Kraftfahrzeuges mittels der Elektromaschine können die Batterien von dem von der Elektromaschine erzeugen elektrischen Strom aufgeladen werden. Außerdem können die Batterien auch während eines Stillstandes des Kraftfahrzeugs, beispielsweise von einem öffentlichen Stromnetz, aufgeladen werden. Insbesondere sind die Batterien als Lithiumionenbatterien ausgebildet.

### Kurze Beschreibung der Zeichnungen

Im Nachfolgenden werden zwei Ausführungsbeispiele der Erfindung unter Bezugnahme auf die beigefügten Zeichnungen näher beschrieben. Es zeigt:
- Fig. 1: eine stark schematisierte Darstellung einer Hybridantriebseinrichtung,
- Fig. 2: einen Längsschnitt einer Elektromaschine in einer ersten Ausführungsform,
- Fig. 3: eine perspektivische Ansicht einer Wuchtscheibe der Elektromaschine gemäß Fig. 2,
- Fig. 4: einen Längsschnitt einer beispielhaften Elektromaschine,
- Fig. 5: einen Explosionsdarstellung der Elektromaschine in einer zweiten Ausführungsform,
- Fig. 6: einen Längsschnitt der Elektromaschine gemäß Fig. 5 und
- Fig. 7: eine Ansicht eines Kraftfahrzeuges.

### Ausführungsformen der Erfindung

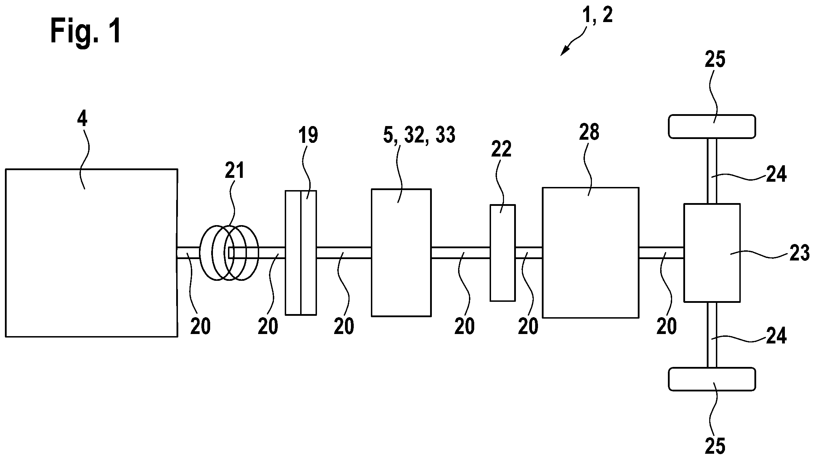

In Fig. 1 ist eine Hybridantriebseinrichtung 2 ausgebildete Antriebseinrichtung 1 für ein Kraftfahrzeug 3 dargestellt. Die Hybridantriebseinrichtung 2 für ein Kraftfahrzeug 3 umfasst eine Verbrennungskraftmaschine 4 sowie eine Elektromaschine 5, die als Motor 32 und Generator 33 fungiert, jeweils zum Antreiben oder Verzögern des Kraftfahrzeuges 3. Die Verbrennungskraftmaschine 4 und die Elektromaschine 5 sind mittels einer Antriebswelle 20 miteinander verbunden. Die mechanische Koppelung zwischen der Verbrennungskraftmaschine 4 und der Elektromaschine 5 kann mittels einer Kupplung 19 hergestellt und aufgehoben werden. Ferner ist in der Antriebswelle 20, welche die Verbrennungskraftmaschine 4 und die Elektromaschine 5 miteinander koppelt, eine Elastizität 21 angeordnet. Die Elektromaschine 5 ist mit einem Differentialgetriebe 23 mechanisch gekoppelt. In der Antriebswelle 20, welche die Elektromaschine 5 und das Differentialgetriebe 23 miteinander verbindet, ist ein Wandler 22 und ein Getriebe 28 angeordnet. Mittels des Differentialgetriebes 23 werden über die Radachsen 24 die Antriebsräder 25 angetrieben.

Anstelle der in Fig. 1 dargestellten Anordnung der Verbrennungskraftmaschine 4 und der Elektromaschine 5 für das Kraftfahrzeug 3 sind auch andere Möglichkeiten denkbar (nicht dargestellt). Beispielsweise kann die Elektromaschine 5 seitlich an der Verbrennungskraftmaschine 4 angeordnet sein und mittels eines Riemens oder einer Kette oder von Zahnrädern mit der Verbrennungskraftmaschine 4 mechanisch verbunden sein anstelle der in Fig. 1 abgebildeten Antriebswelle 20 (nicht dargestellt). Außerdem könnte die Elektromaschine 5 an einem Getriebe, z. B. ein Ausgleichsgetriebe, angeordnet sein oder die Elektromaschine 5 kann als Radnabenmotor und/oder als Radnabengenerator fungieren, d. h. im Bereich einer Radnabe angeordnet sein (nicht dargestellt).

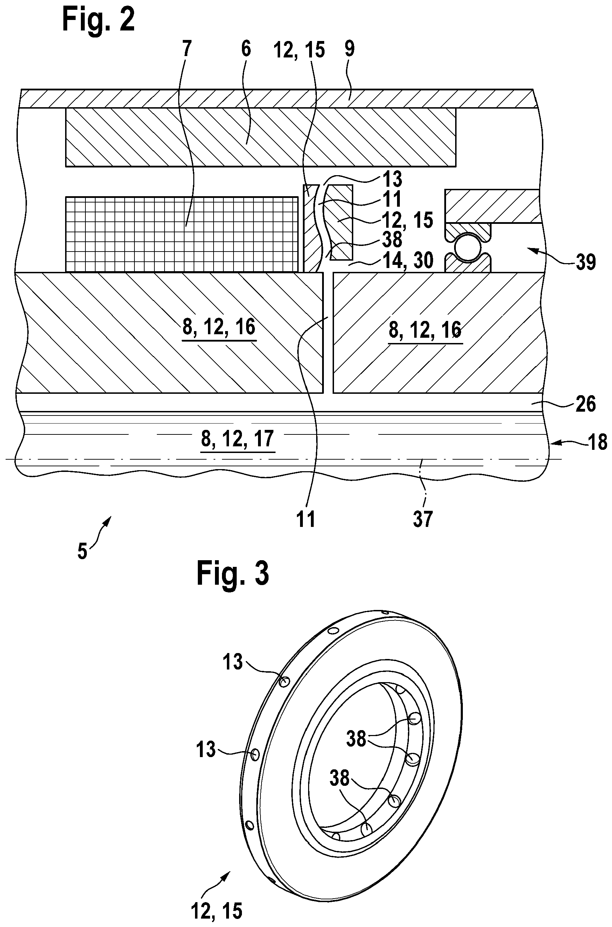

Fig. 2 zeigt die Elektromaschine 5 für die Hybridantriebseinrichtung 2 als Innenpolmaschine in einer ersten Ausführungsform mit einem feststehenden Stator 6 und einem rotierenden Rotor 7 der Hybridantriebseinrichtung 1 in einer stark vereinfachten Darstellung, so dass beispielsweise elektrische Leitungen, die Wicklungen des Stators 6 und des Rotors 7, und Fixierungsmittel für den Stator 6 nicht oder nur stark vereinfacht dargestellt sind. Eine Welle 8 besteht aus Metall, z. B. Stahl, auf dem der Rotor 7 konzentrisch angeordnet ist, wobei die Welle 8 und der Rotor 7 mittels einer Lagerung 39 an einem feststehenden Gehäuse 9 gelagert sind. Konzentrisch um den Rotor 7 ist der Stator 6 an dem Gehäuse 9 angeordnet, der mittels nicht dargestellter Fixierungsmittel daran befestigt ist. Der Stator 6 kann auch ohne zusätzliche Fixierungsmittel an dem Gehäuse 9 befestigt sein, z. B. mittels Pressverbund und/oder Schrumpfverbund. Die Welle 8 ist dabei innerhalb der Hybridantriebseinrichtung 2 mit der Antriebswelle 20 der Hybridantriebseinrichtung 2 verbunden bzw. stellt einen Teil der Antriebswelle 20 dar.

In Fig. 2 ist die Elektromaschine 5 nur oberhalb einer Achse 37 der Welle 8 abgebildet. Die Welle 8 der Elektromaschine 5 besteht aus einer inneren Welle 17 und einer Rotorwelle 16. Die Rotorwelle 16 ist mit einer axialen Bohrung 18 versehen, in der die innere Welle 17 angeordnet ist. Zwischen der inneren Welle 17 und der Rotorwelle 16 entsteht aufgrund der Geometrie der axialen Bohrung 18 und des Durchmessers der inneren Welle 17 ein im Querschnitt kreisförmiger Spalt 26. Die Rotorwelle 16 und die innere Welle 17 sind rotierende Teile 12 der Elektromaschine 5, welche um die Achse 37 der Welle 8 bzw. der Rotorwelle 16 und der inneren Welle 17 rotieren. Die Rotorwelle 16 ist mit radialen Kanälen 11 versehen (in Fig. 2 ist nur ein Kanal 11 dargestellt). An der Rotorwelle 16 ist ferner eine Wuchtscheibe 15 angeordnet. Die Wuchtscheibe 15 hat die Aufgabe, Unwuchten an dem Rotor 7 zu verhindern und ferner Öl zur Kühlung zu fördern und zu verteilen. Die Wuchtscheibe 15 (Fig. 2 und 3) weist ebenfalls radial ausgerichtete Kanäle 11 auf, welche am radial betrachtet inneren Ende in Eintrittsöffnungen 38 und am radial äußeren Ende betrachtet Austrittsöffnungen 13 aufweisen.

Von einem nicht in Fig. 2 und 3 dargestellten Kühlkreislauf 10 mit einer Pumpe 27 und einem Pumpensumpf 29 wird eine Flüssigkeit, insbesondere Öl, zur Kühlung des Stators 6 und des Rotors 7 in den Spalt 26 eingeleitet. Das Öl strömt dabei aus dem Spalt 26 durch die in die Rotorwelle 16 eingearbeiteten Kanäle 11 und anschließend durch die in die Wuchtscheibe 15 eingearbeiteten Kanäle 11. Das Öl strömt somit aus den Kanälen 11 der Rotorwelle 16 durch die Eintrittsöffnungen 38 in die Kanäle 11 der Wuchtscheibe 15 ein und tritt an den Austrittsöffnungen 13 der Wuchtscheibe 15 wieder aus und wird auf den Stator 6 sowie auch auf den Rotor 7 zur Kühlung des Stators 6 und des Rotors 7 gespritzt. Anschließend sammelt sich das herausgespritzte Öl wieder in einem nicht dargestellten Sammelbereich und wird zudem in dem nicht in Fig. 2 dargestellten Pumpensumpf 29 geleitet. Die Rotorwelle 16 und die Wuchtscheibe 15 als rotierende Teile 12 mit den damit auch rotierenden Kanälen 11 haben einen Ansaugeffekt aufgrund der in den Kanälen 11 wirkenden Zentrifugalkräfte, so dass diese im Kühlkreislauf 10 einen Unterdruck erzeugen können.

Die Wuchtscheibe 15 weist eine ringförmige Luftansaugöffnung 30 auf, so dass sich beim Übergang des durch die Kanäle 11 strömenden Öles von der Rotorwelle 16 auf die Wuchtscheibe 15 eine Verringerung des Unterdruckes in den Kanälen 11 eintritt, weil die Luftansaugöffnung 30 mit dem Atmosphärendruck verbunden ist und dadurch Luft in die Kanäle 11 im Bereich zwischen der Wuchtscheibe 15 und der Rotorwelle 16 einströmen kann. Dadurch wird der Ansaugeffekt der Kanäle 11 in der Wuchtscheibe 15 wesentlich reduziert, so dass auch bei sehr hohen Drehzahlen der rotierenden Teile 12 der Elektromaschine 5 von den Kanälen 11 nur ein geringer Unterdruck erzeugt wird. Dadurch kann innerhalb des nicht dargestellten Kühlkreislaufes 10 ein starker Unterdruck vermieden werden. Ferner werden bei hohen Drehzahlen der rotierenden Teile 12 von den Kanälen 11 nicht zu große Mengen an Öl aus dem Kühlkreislauf 10 abgesaugt, so dass bei einer Integration der Elektromaschine 5 in die Antriebseinrichtung 1 auch weitere Komponenten der Antriebseinrichtung 1, welche von dem Öl zu kühlen und/oder zu schmieren sind, genügend Öl zur Kühlung zur Verfügung steht. Dabei wird das Öl weiterhin an die gewünschten Flächen geleitet, d. h. die Stirnfläche des Rotors 7 und die Wickelköpfe des Stators 6, welche von dem Öl zu kühlen sind, weil die Austrittsöffnungen 13 unverändert sind. Die Luftansaugöffnung 30 ist damit ein Mittel 14 zur Verringerung der Fördermenge pro Zeiteinheit an Öl. Aufgrund der Integration der Luftansaugöffnung 30 in die Wuchtscheibe 15 wird in vorteilhafter Weise kein zusätzlicher Bauraum für das Mittel 14 zur Verringerung der Fördermenge an Öl benötigt.

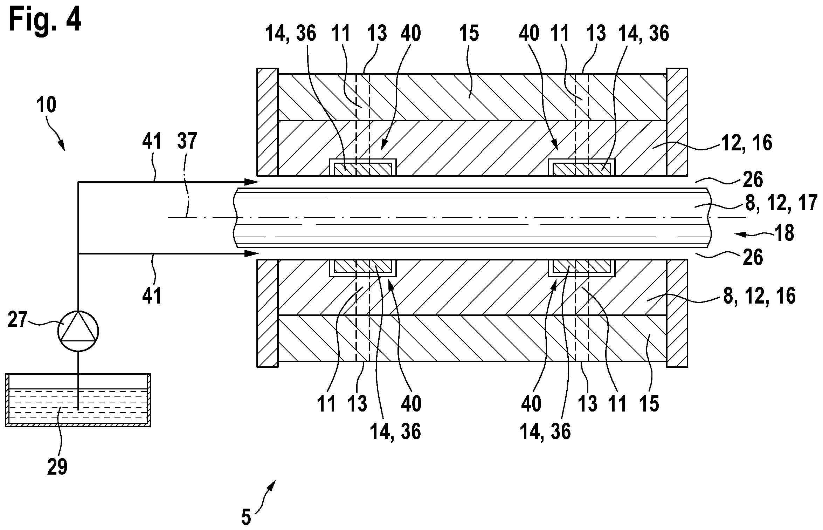

In Fig. 4 ist eine beispielhafte Elektromaschine 5 dargestellt. Die Elektromaschine 5 weist analog zu dem ersten Ausführungsbeispiel gemäß Fig. 2 und 3 eine aus der inneren Welle 17 und der Rotorwelle 16 bestehende Welle 8 auf, wobei zwischen der inneren Welle 17 und der Rotorwelle 16 der Spalt 26 zum Durchleiten von Öl als Kühlflüssigkeit vorhanden ist. Das Öl wird in den Spalt 26 mittels der Pumpe 27 von dem Pumpensumpf 29 durch Ölleitungen 41 in den Spalt 26 geleitet. Von einem nicht dargestellten Auffangbereich wird das Öl wieder mittels nicht dargestellter Sammelleitungen zu dem Pumpensumpf 29 zurückgeleitet, so dass sich der Kühlkreislauf 10 zur Kühlung mittels Öl ausbildet. In Fig. 4 sind der Stator 6, der Rotor 7 und das Gehäuse 9 der Elektromaschine 5 nicht abgebildet. In die Rotorwelle 16 sind innenseitig im Bereich der axialen Bohrung 18 tangentiale Ausnehmungen 40 eingearbeitet. In den tangentialen Ausnehmungen 40 befinden sich Tangentialdrosselelemente 36. Die Tangentialdrosselelemente 36 werden mittels nicht dargestellter Führungseinrichtungen, z. B. einer Gleitlagerung mittels einer Nut und Federverbindung (nicht dargestellt) der Tangentialdrosselelemente 36, in der tangentialen Ausnehmung 40 geführt und sind somit in tangentialer Richtung in den tangentialen Ausnehmungen 40 bewegbar. In der Rotorwelle 16 sowie in der darüber angeordneten Wuchtscheibe 15 sind radiale Kanäle 11 eingearbeitet, die in Fig. 4 strichliert dargestellt sind. Das Öl strömt somit durch den Spalt 26 und durch die Kanäle 11 und tritt an den Austrittsöffnungen 13 an der Wuchtscheibe 15 aus zur Kühlung des nicht in der Figur abgebildeten Stators 6 und des Rotors 7. Bei einer Erhöhung der Drehzahl der rotierenden Teile 12 mit den eingearbeiteten Kanälen 11, d. h. der Rotorwelle 16 und der Wuchtscheibe 15, tritt eine Trägheitskraft bzw. Massenträgheitskraft bzw. eine Tangentialkraft auf, welche auf die Tangentialdrosselelemente 36 wirkt. Dadurch bewegen sich die Tangentialdrosselelemente 36 in tangentialer Richtung in den tangentialen Ausnehmungen 40. Die Tangentialdrosselelemente 36 sind dabei dahingehend zu den Kanälen 11 angeordnet, dass bei einer Erhöhung der Drehzahl die Strömungsquerschnittsfläche der Kanäle 11 verringert wird. Aufgrund der Verringerung der Strömungsquerschnittsfläche der Kanäle 11 verringert sich die von den Kanälen 11 geförderte Menge an Öl pro Zeiteinheit.

Bei einer Verringerung der Drehzahl der rotierenden Teile 12 bewegen sich die Tangentialdrosselelemente 36 wieder in entgegengesetzter Richtung zurück, so dass dadurch die Strömungsquerschnittsfläche der Kanäle 11 vergrößert wird und dadurch die Verringerung der Fördermenge pro Zeiteinheit an Öl aufgrund der Verkleinerung der Strömungsquerschnittsfläche der Kanäle mittels der Tangentialdrosselelemente 36 verkleinert wird. Die Rückbewegung der Tangentialdrosselelemente 36 bei einer sinkenden Drehzahl wird vorzugsweise durch ein in Fig. 4 nicht abgebildetes elastisches Element 34, z. B. eine Feder 35, unterstützt, um eine Rückbewegung sicherzustellen.

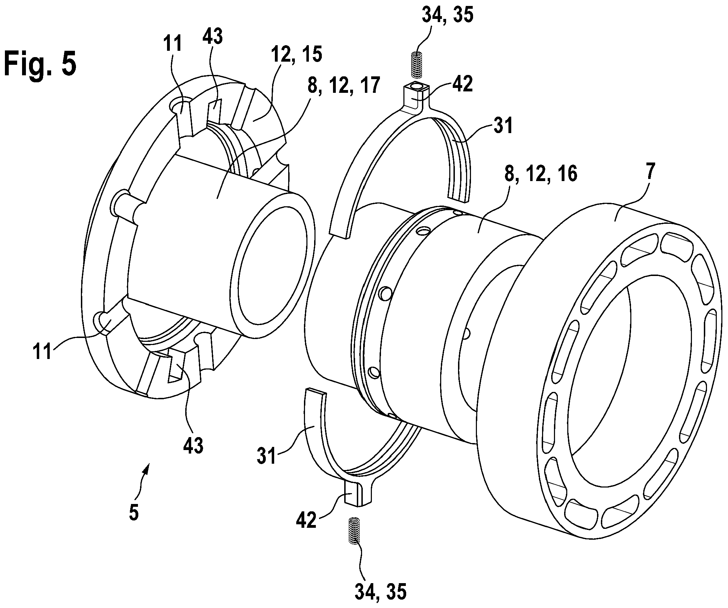

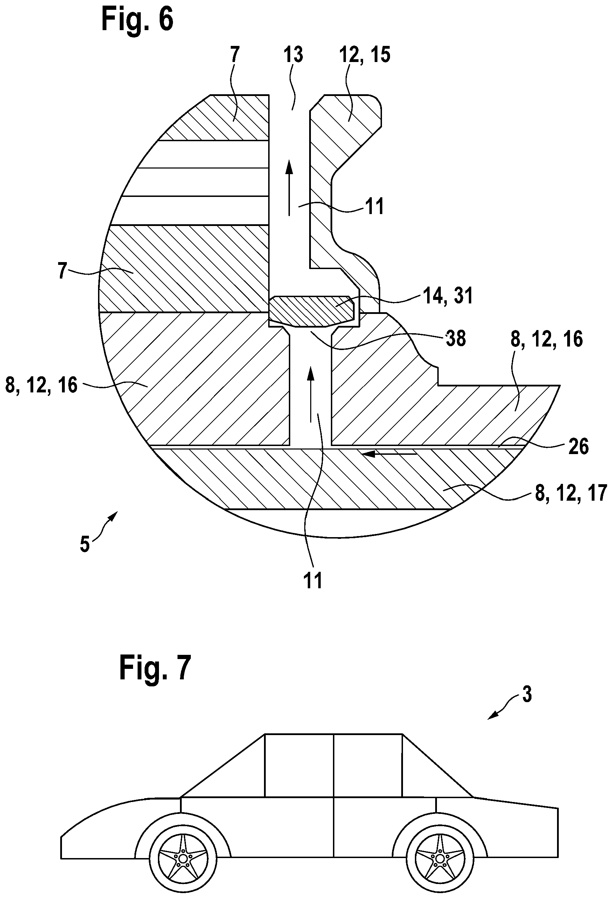

In Fig. 5 und 6 ist das weite Ausführungsbeispiel der Elektromaschine 5 dargestellt. Der Stator 6, das Gehäuse 9 und der Kühlkreislauf 10 der Elektromaschine 5 sind in Fig. 5 und 6 nicht dargestellt. In die Wuchtscheibe 15 sind radiale Ausnehmungen als Kanäle 11 eingearbeitet (Fig. 5). Dadurch entstehen bzw. bilden sich zwischen dem Rotor 7 und der Wuchtscheibe 15 die Kanäle 11 (Fig. 6). Die Elektromaschine 5 weist zwei halbmondförmige Radialdrosselelemente 31 auf. An einem Stutzen 42 der halbmondförmigen Radialtrosselemente 31 ist jeweils das als Feder 35 ausgebildete elastische Element 34 angeordnet (Fig. 5). Das elastische Element 34 bzw. die Feder 35 sind in Fig. 6 nicht dargestellt. Der Stutzen 42 mit der Feder 35 sind in einer Ausnehmung 43 der Wuchtscheibe 15 angerordnet (nicht dargestellt). In Fig. 6 ist die Stellung des Radialdrosselelementes 31 bei einer sehr geringen Drehzahl dargestellt. Das von der nicht in Fig. 6 dargestellten Pumpe 27 des Kühlkreislaufes 10 geförderte Öl strömt durch den Spalt 26, die Kanälen 11 in der Rotorwelle 16 und die Kanälen 11 in der Wuchtscheibe 15 zu den Austrittsöffnungen 13 und spritzt auf den zu kühlenden Stator 6 (nicht dargestellt) und den zu kühlenden Rotor 7 (nicht in Fig. 5 und 6 dargestellt). Das Öl umströmt dabei gemäß der Darstellung in Fig. 6 das Radialdrosselelement 31. Bei einer Erhöhung der Drehzahl der rotierenden Teile 12 der Elektromaschine 5 bewegt sich das Radialdrosselelement 31 radial nach außen (nicht dargestellt) aufgrund der höheren Zentrifugalkraft, welches auf das Radialdrosselelement 31 wirkt. Dadurch wird die Strömungsquerschnittsfläche des Kanales 11 in der Wuchtscheibe 15 im Bereich des Radialdrosselelementes 31 verringert, so dass sich dadurch die Fördermenge an Öl pro Zeiteinheit verringert. Der auf das Radialdrosselelement 31 wirkenden Zentrifugalkraft wirkt die Federkraft der Feder 35 entgegen. Je höher die Drehzahl der rotierenden Teile 12 ist, desto weiter ist somit das Radialdrosselelement 31 von einer nicht in Fig. 6 abgebildeten Achse 37 der Welle 8 entfernt und desto kleiner ist die Strömungsquerschnittsfläche der Kanäle 11 im Bereich der Radialdrosselelemente 31. Bei einer Reduzierung der Drehzahl der rotierenden Teile 12 verringert sich die auf das Radialdrosselelement 31 wirkende Zentrifugalkraft, so dass sich dadurch das Radialdrosselelement 31 radial in Richtung zu der Achse 37 bewegt aufgrund der Federkraft der Feder 35, so dass sich dadurch die Strömungsquerschnittsfläche des Kanales 11 im Bereich der Wuchtscheibe 15 wieder vergrößert. Je größer die Drehzahl der rotierenden Teile 12 ist, desto kleiner ist damit die Strömungsquerschnittsfläche des wenigstens einen Kanales 11 im Bereich der Wuchtscheibe 15 und umgekehrt. Dadurch wird in vorteilhafter Weise bei einer hohen Drehzahl der rotierenden Teile 12 vermieden, dass aufgrund der Saugwirkung der Kanäle 11 ein Unterdruck im Kühlkreislauf 10 entsteht und es dadurch zu Undichtigkeiten kommen kann. Das Radialdrosselelement 31 als Mittel 14 zur Verringerung der Fördermenge an Öl pro Zeiteinheit kann auch dahingehend ausgebildet sein, dass ab einer bestimmten Drehzahl der rotierenden Teile 12 kein Öl mehr durch die Kanäle 11 strömt, d. h. dass die Strömungsquerschnittsfläche der Kanäle 11 Null oder im Wesentlichen gleich Null ist.

Die Einzelheiten der verschiedenen Ausführungsbeispiele können miteinander kombiniert werden, sofern nichts Gegenteiliges erwähnt wird.

Insgesamt betrachtet sind mit der erfindungsgemäßen Antriebseinrichtung 1 wesentliche Vorteile verbunden. Die von den Kanälen 11 aufgrund der Rotationsbewegung der Kanäle 11 geförderte Menge an Öl zum Kühlen wird von Mitteln 14 verringert oder begrenzt, so dass für andere zu kühlende und/oder zu schmierende Komponenten 4, 23, 28 der Antriebseinrichtung 1, z. B. das Getriebe 28 und/oder das Differentialgetriebe 23 und/oder die Verbrennungskraftmaschine 4, genügend Öl zum Kühlen und/oder zum Schmieren verbleibt, welches von der Pumpe 27 zu diesen Komponenten 4, 23, 28 gefördert wird.

## Patentansprüche

1. Elektromaschine (5), insbesondere für ein Kraftfahrzeug, umfassend
- ein Gehäuse (9),
- wenigstens eine Welle (8),
- einen Stator (6) und einen Rotor (7),
- einen Kühlkreislauf (10) zum Kühlen der Elektromaschine (5) mit einer Flüssigkeit, insbesondere Öl, wobei die Flüssigkeit von wenigstens einem, wenigstens teilweise radial ausgerichteten Kanal (11) in wenigstens einem rotierenden Teil (12) der Elektromaschine (5) förderbar ist aufgrund einer Rotationsbewegung des wenigstens einen Kanales (11),
- wenigstens eine Austrittsöffnung (13) zum Ausleiten der Flüssigkeit aus dem wenigstens einen Kanal (11),
- wobei die Elektromaschine (5) mit wenigstens einem Mittel (14) zur Verringerung der Fördermenge pro Zeiteinheit an Flüssigkeit, welche von dem wenigstens einen Kanal (11) aufgrund der Rotationsbewegung des wenigstens einen Kanales (11) förderbar ist, versehen ist,
**dadurch gekennzeichnet, dass**
- das wenigstens eine Mittel (14) wenigstens eine Luftansaugöffnung (30) umfasst, wobei die wenigstens eine Luftansaugöffnung (30) fluidleitend mit dem wenigstens einen Kanal (11) verbunden ist zur Verringerung der Fördermenge pro Zeiteinheit an Flüssigkeit.

2. Elektromaschine nach Anspruch 1, **dadurch gekennzeichnet, dass** das wenigstens eine rotierende Teil (12) die wenigstens eine Welle (8) und/oder eine Wuchtscheibe (15) ist.

3. Elektromaschine nach Anspruch 2, **dadurch gekennzeichnet, dass** die wenigstens eine Welle (8) eine Rotorwelle (16) mit einer axialen Bohrung (18) und einer inneren Welle (17) umfasst, wobei die innere Welle (17) in der axialen Bohrung (18) der Rotorwelle (16) angeordnet ist.

4. Elektromaschine nach Anspruch 3, **dadurch gekennzeichnet, dass** zwischen der inneren Welle (17) und der Rotorwelle (16) ein im Querschnitt kreisförmiger Spalt (26) zum Durchleiten der Flüssigkeit vorhanden ist.

5. Elektromaschine nach einem oder mehreren der vorhergehenden Ansprüche, **dadurch gekennzeichnet, dass** der Kühlkreislauf (10) mit einer Pumpe (27) versehen ist zur zusätzlichen Förderung der Flüssigkeit, vorzugsweise aus einem Pumpensumpf (29).

6. Elektromaschine nach Anspruch 1, **dadurch gekennzeichnet, dass** die wenigstens eine Luftansaugöffnung (30) radial innerhalb der wenigstens einen Austrittsöffnung (13) ausgebildet ist und/oder die wenigstens eine Luftansaugöffnung (30) in dem wenigstens einen rotierenden Teil (12) ausgebildet ist.

7. Elektromaschine (5), insbesondere für ein Kraftfahrzeug, umfassend
- ein Gehäuse (9),
- wenigstens eine Welle (8),
- einen Stator (6) und einen Rotor (7),
- einen Kühlkreislauf (10) zum Kühlen der Elektromaschine (5) mit einer Flüssigkeit, insbesondere Öl, wobei die Flüssigkeit von wenigstens einem, wenigstens teilweise radial ausgerichteten Kanal (11) in wenigstens einem rotierenden Teil (12,16,17) der Elektromaschine (5) förderbar ist aufgrund einer Rotationsbewegung des wenigstens einen Kanales (11),
- wenigstens eine Austrittsöffnung (13) zum Ausleiten der Flüssigkeit aus dem wenigstens einen Kanal (11),
- wobei die Elektromaschine (5) mit wenigstens einem Mittel (14) zur Verringerung der Fördermenge pro Zeiteinheit an Flüssigkeit, welche von dem wenigstens einen Kanal (11) aufgrund der Rotationsbewegung des wenigstens einen Kanales (11) förderbar ist, versehen ist,
**dadurch gekennzeichnet, dass**
- das wenigstens eine Mittel (14) dahingehend ausgebildet ist, dass die Verringerung der Fördermenge pro Zeiteinheit an Flüssigkeit aufgrund der Rotationsbewegung des wenigstens einen Kanales (11) in Abhängigkeit von der Drehzahl des rotierenden Teils (12), insbesondere der wenigstens einen Welle (8), erfolgt, insbesondere indem eine Strömungsquerschnittsfläche des wenigstens einen Kanales (11) veränderbar ist.

8. Elektromaschine nach Anspruch 7, **dadurch gekennzeichnet, dass** das wenigstens eine Mittel (14) wenigstens ein wenigstens teilweise in radialer Richtung bewegbares Radialdrosselelement (31) umfasst, wobei das wenigstens eine Radialdrosselelement (31) mittels einer Zentrifugalkraft in dem wenigstens einen Kanal (11) bewegbar ist, so dass je größer die Zentrifugalkraft ist, desto kleiner die Strömungsquerschnittsfläche des wenigstens einen Kanales (11) wird.

9. Elektromaschine nach Anspruch 8, **dadurch gekennzeichnet, dass** das wenigstens eine Mittel (14) wenigstens ein elastisches Element (34), z. B. eine Feder (35), umfasst, um das wenigstens eine Radialdrosselelement (31) bei einer kleiner werdenden Zentrifugalkraft zu bewegen, so dass bei einer kleiner werdenden Zentrifugalkraft die Strömungsquerschnittsfläche des wenigstens einen Kanales (11) vergrößert wird.

10. Elektromaschine nach Anspruch 8 oder 9, **dadurch gekennzeichnet, dass** das wenigstens eine Radialdrosselelement (31) und/oder das wenigstens eine elastische Element (34) in dem rotierenden Teil (12), z. B. der Wuchtscheibe (15), angeordnet ist.

11. Antriebseinrichtung (1), vorzugsweise Hybridantriebseinrichtung (2), insbesondere für ein Kraftfahrzeug (3), umfassend
- vorzugsweise eine Verbrennungskraftmaschine (4), insbesondere zum Antrieb des Kraftfahrzeuges (3),
- wenigstens eine Elektromaschine (5) mit einem Stator (6) und einem Rotor (7), insbesondere zum Antrieb des Kraftfahrzeuges (3),
**dadurch gekennzeichnet, dass**
- die wenigstens eine Elektromaschine gemäß einem oder mehrerer der vorhergehenden Ansprüche ausgebildet ist.

## Claims

1. Electric machine (5), particularly for a motor vehicle, comprising
- a housing (9),
- at least one shaft (8),
- a stator (6) and a rotor (7),
- a cooling circuit (10) for cooling the electric machine (5) with a liquid, particularly oil, wherein the liquid can be conveyed by at least one channel (11) aligned radially at least partially in at least one rotating part (12) of the electric machine (5) because of a rotational movement of the at least one channel (11),
- at least one outlet opening (13) for draining the liquid from the at least one channel (11),
- wherein the electric machine (5) is provided with at least one means (14) for reducing the rate of delivery per unit time of liquid which can be conveyed by the at least one channel (11) because of the rotational movement of the at least one channel (11),
**characterized in that**
- the at least one means (14) comprises at least one air intake opening (30), wherein the at least one air intake opening (30) is connected in a fluidically conductive manner to the at least one channel (11) for reducing the rate of delivery per unit time of liquid.

2. Electric machine according to Claim 1, **characterized in that** the at least one rotating part (12) is the at least one shaft (8) and/or a balancing disc (15).

3. Electric machine according to Claim 2, **characterized in that** the at least one shaft (8) comprises a rotor shaft (16) with an axial bore (18) and an inner shaft (17), wherein the inner shaft (17) is arranged in the axial bore (18) of the rotor shaft (16).

4. Electric machine according to Claim 3, **characterized in that** a gap (26) that is circular in cross section is present between the inner shaft (17) and the rotor shaft (16) for conducting the liquid.

5. Electric machine according to any one or a plurality of the preceding claims, **characterized in that** the cooling circuit (10) is provided with a pump (27) for the additional delivery of the liquid, preferentially from a pump sump (29).

6. Electric machine according to Claim 1, **characterized in that** the at least one air intake opening (30) is designed radially within the at least one outlet opening (13) and/or the at least one air intake opening (30) is designed in the at least one rotating part (12).

7. Electric machine (5), particularly for a motor vehicle, comprising
- a housing (9),
- at least one shaft (8),
- a stator (6) and a rotor (7),
- a cooling circuit (10) for cooling the electric machine (5) with a liquid, particularly oil, wherein the liquid can be conveyed by at least one channel (11) aligned radially at least partially in at least one rotating part (12, 16, 17) of the electric machine (5) because of a rotational movement of the at least one channel (11),
- at least one outlet opening (13) for draining the liquid from the at least one channel (11),
- wherein the electric machine (5) is provided with at least one means (14) for reducing the rate of delivery per unit time of liquid which can be conveyed by the at least one channel (11) because of the rotational movement of the at least one channel (11),
**characterized in that**
- the at least one means (14) is designed such that the reduction of the rate of delivery per unit time of liquid takes place because of the rotational movement of the at least one channel (11) as a function of the rotational speed of the rotating part (12), particularly of the at least one shaft (8), particularly **in that** a flow cross-sectional area of the at least one channel (11) is variable.

8. Electric machine according to Claim 7, **characterized in that** the at least one means (14) comprises at least one radial throttling element (31) that can be at least partially moved in radial direction, wherein the at least one radial throttling element (31) can be moved into the at least one channel (11) by means of a centrifugal force, so that the greater the centrifugal force, the smaller the flow cross-sectional area of the at least one channel (11) becomes.

9. Electric machine according to Claim 8, **characterized in that** the at least one means (14) comprises at least one elastic element (34), e.g. a spring (35), in order to move the at least one radial throttling element (31) in the event of a diminishing centrifugal force so that in the event of a diminishing centrifugal force the flow cross-sectional area of the at least one channel (11) is enlarged.

10. Electric machine according to Claim 8 or 9, **characterized in that** the at least one radial throttling element (31) and/or the at least one elastic element (34) are arranged in the rotating part (12), e.g. the balancing disc (15).

11. Drive unit (1), preferentially hybrid drive unit (2), particularly for a motor vehicle (3), comprising
- preferentially a combustion engine (4), particularly for driving the motor vehicle (3),
- at least one electric machine (5) with a stator (6) and a rotor (7), particularly for driving the motor vehicle (3),
**characterized in that**
- the at least one electric machine is designed according to any one or a plurality of the preceding claims.

## Revendications

1. Machine électrique (5), en particulier pour un véhicule automobile, comprenant
- un boîtier (9),
- au moins un arbre (8),
- un stator (6) et un rotor (7),
- un circuit de refroidissement (10) pour refroidir la machine électrique (5) avec un liquide, en particulier de l'huile, le liquide pouvant être transporté par au moins un canal (11) orienté au moins en partie radialement dans au moins une pièce rotative (12) de la machine électrique (5) sur la base d'un mouvement de rotation de l'au moins un canal (11),
- au moins une ouverture de sortie (13) pour guider le liquide hors de l'au moins un canal (11),
- la machine électrique (5) étant pourvue d'au moins un moyen (14) pour réduire la quantité de liquide transportée par unité de temps, qui peut être transportée par l'au moins un canal (11) sur la base du mouvement de rotation de l'au moins un canal (11),
**caractérisée en ce que**
- l'au moins un moyen (14) comprend au moins une ouverture d'aspiration d'air (30), l'au moins une ouverture d'aspiration d'air (30) étant connectée fluidiquement à l'au moins un canal (11) pour réduire la quantité de liquide transportée par unité de temps.

2. Machine électrique selon la revendication 1, **caractérisée en ce que** l'au moins une pièce rotative (12) est l'au moins un arbre (8) et/ou un disque d'équilibrage (15).

3. Machine électrique selon la revendication 2, **caractérisée en ce que** l'au moins un arbre (8) comprend un arbre de rotor (16) avec un alésage axial (18) et un arbre interne (17), l'arbre interne (17) étant disposé dans l'alésage axial (18) de l'arbre de rotor (16).

4. Machine électrique selon la revendication 3, **caractérisée en ce qu'**entre l'arbre interne (17) et l'arbre de rotor (16) est prévue une fente (26) de forme circulaire en section transversale pour conduire le liquide.

5. Machine électrique selon l'une quelconque ou plusieurs des revendications précédentes, **caractérisée en ce que** le circuit de refroidissement (10) est pourvu d'une pompe (27) pour un refoulement supplémentaire du liquide, de préférence depuis un puisard de pompe (29).

6. Machine électrique selon la revendication 1, **caractérisée en ce que** l'au moins une ouverture d'aspiration d'air (30) est réalisée radialement à l'intérieur de l'au moins une ouverture de sortie (13) et/ou l'au moins une ouverture d'aspiration d'air (30) est réalisée dans l'au moins une pièce rotative (12).

7. Machine électrique (5) en particulier pour un véhicule automobile, comprenant
- un boîtier (9),
- au moins un arbre (8),
- un stator (6) et un rotor (7),
- un circuit de refroidissement (10) pour refroidir la machine électrique (5) avec un liquide, en particulier de l'huile, le liquide pouvant être transporté par au moins un canal (11) orienté au moins en partie radialement dans au moins une pièce rotative (12, 16, 17) de la machine électrique (5) sur la base d'un mouvement de rotation de l'au moins un canal (11),
- au moins une ouverture de sortie (13) pour guider le liquide hors de l'au moins un canal (11),
- la machine électrique (5) étant pourvue d'au moins un moyen (14) pour réduire la quantité de liquide transportée par unité de temps, qui peut être transportée par l'au moins un canal (11) sur la base du mouvement de rotation de l'au moins un canal (11),
**caractérisée en ce que**
- l'au moins un moyen (14) est réalisé de telle sorte que la réduction de la quantité de liquide transportée par unité de temps sur la base du mouvement de rotation de l'au moins un canal (11) s'effectue en fonction de la vitesse de rotation de la pièce rotative (12), en particulier de l'au moins un arbre (8), en particulier **en ce qu'**une surface d'écoulement en section transversale de l'au moins un canal (11) est variable.

8. Machine électrique selon la revendication 7, **caractérisée en ce que** l'au moins un moyen (14) comprend au moins un élément d'étranglement radial (31) déplaçable au moins en partie dans la direction radiale, l'au moins un élément d'étranglement radial (31) pouvant être déplacé au moyen d'une force centrifuge dans l'au moins un canal (11), de telle sorte que plus la force centrifuge est grande, plus la surface en section transversale d'écoulement de l'au moins un canal (11) est petite.

9. Machine électrique selon la revendication 8, **caractérisée en ce que** l'au moins un moyen (14) comprend au moins un élément élastique (34), par exemple un ressort (35), afin de déplacer l'au moins un élément d'étranglement radial (31) dans le cas d'une force centrifuge diminuant, de telle sorte que dans le cas d'une force centrifuge diminuant, la surface en section transversale d'écoulement de l'au moins un canal (11) soit augmentée.

10. Machine électrique selon la revendication 8 ou 9, **caractérisée en ce que** l'au moins un élément d'étranglement radial (31) et/ou l'au moins un élément élastique (34) sont disposés dans la pièce rotative (12), par exemple le disque d'équilibrage (15).

11. Dispositif d'entraînement (1), de préférence dispositif d'entraînement hybride (2), en particulier pour un véhicule automobile (3), comprenant
- de préférence un moteur à combustion interne (4), en particulier pour l'entraînement du véhicule automobile (3),
- au moins une machine électrique (5) avec un stator (6) et un rotor (7), en particulier pour l'entraînement du véhicule automobile (3),
**caractérisé en ce que**
- l'au moins une machine électrique est réalisée selon l'une quelconque ou plusieurs des revendications précédentes.
